# EUROPEAN PATENT APPLICATION

(11) **EP 4 375 554 A1**
(43) Date of publication of application: **29.05.2024**
(21) Application number: 23209453.2
(22) Date of filing: 13.11.2023
(51) Int. Cl.: F16L 41/02, F16L 43/00, F16L 55/16

(54) **ACCESORIES FOR REPAIRING PIPES BY WELDING**

(30) Priority: 24.11.2022 ES 202231965 U
(71) Applicant: Gonzalez da Silva, Miguel, 08818 Olivella Barcelona (ES)
(72) Inventor: Gonzalez da Silva, Miguel, 08818 Olivella Barcelona (ES)
(74) Representative: Durán-Corretjer, S.L.P.

(57) **Abstract**

Accessory (1) for repairing a pipe by welding comprising at least two arms, each arm in turn comprising an end mouth (31, 32, 33) for receiving a pipe and a stop (41, 42, 43) for limiting the insertion of said pipe into the accessory. Each arm comprises an end section (21, 22, 23) for receiving the pipe and an inner section (11, 12, 13). The stop (41, 42, 43) is arranged between the end section (21, 22, 23) and the inner section (11, 12, 13). In each arm, the internal diameter of the end section (21, 22, 23) is greater than that of the inner section (11, 12, 13), and the length of the inner section (11, 12, 13) is equal to or greater than the length of the end section (21, 22, 23).

## Description

The present invention relates to accessories for pipes. More specifically, the present invention relates to accessories for repairing pipes and replacing faulty accessories by welding.

Accessories for pipes mainly used for two purposes, specifically to make joins and/or changes of direction in the general network of a circuit and to repair pipes, are known. Fluid leaks can occur anywhere for a variety of reasons: corrosion, exposure of a specific section to wear, a crack caused by a specific stress point, and the like. Failures occurring in a pipe in a pipe circuit are usually repaired by installing an accessory thereon. However, most leaks or failures in pipes occur in accessories installed on such pipes. This is because accessories suffer greater wear on account of more abrupt changes in flow, and are less fluidtight on account of lower quality sealing during installation. This means that most failures requiring repair usually involve previously installed accessories, and repairs usually involve replacing an accessory previously installed on a pipe.

To repair or replace an accessory on a pipe, the pipe is usually cut close to each mouth of the accessory. This makes said pipe shorter after cutting. This applies to each pipe section previously reaching the accessory. When installing a new accessory, given that most accessories are standardized, it is most likely that said new accessory will not cover both the space left by the previous accessory and the lost distances in each pipe arm. Since most such accessories are standardized, a larger accessory cannot be used to cover said space and lost distance, since the diameter of the accessory increases with the distance covered (length of the accessory), making it difficult to make a sealed joint. This means that it is often necessary to install an additional accessory (such as a sleeve) to make a joint with a new pipe section that covers the lost distance and the new accessory replacing the damaged accessory.

One aim of the present invention is to disclose an accessory for repairing pipes that simplifies the process of replacing faulty accessories, by reducing either the number of steps or the quantity of material required for said process.

More specifically, the present invention discloses an accessory for repairing a pipe by welding comprising at least two arms, each arm in turn comprising an end mouth for receiving a pipe and a stop for limiting the insertion of said pipe into the accessory. Each arm comprises an end section for receiving the pipe and an inner section. The stop is arranged between the end section and the inner section. In each arm, the internal diameter of the end section is greater than that of the inner section, and the length of the inner section is equal to or greater than the length of the end section.

This configuration or design of the accessory makes the replacement of a faulty accessory rapid, easy and efficient. The distinction between two sections in the arms, with an end section of greater diameter than the inner section, facilitates the insertion of the pipes through the mouth in said section, while the stop limits said insertion and forms a better seal with the edge of the cut pipe, while delimiting or separating one section from the other. Furthermore, the fact that the inner section is at least as long as the end section means that the accessory covers a greater distance between the stop in one arm and the stop in another arm than the distance covered by the end sections. This helps the accessory to cover a greater distance between the cut pipes, while for example maintaining the same sealing length as with the replaced accessory. Maintaining said sealing length also means maintaining the pipe length inserted into the accessory. A shorter accessory length makes installation simpler but less fluidtight, while a longer accessory length makes the join more fluidtight but more difficult. This is also particularly advantageous given that most accessories are standardized, meaning that an accessory usually has an internal diameter intended to mate with the mouth that corresponds to the diameter of the pipe on which the accessory is being installed, and an arm length related to this diameter. In consideration of the foregoing, and given that standard parameters are used to ensure a good seal between the accessory and the pipes, the present invention is designed such that the end section can have the same diameter and length as the arm of the accessory being replaced, which ensures a good seal, and such that the length of the inner section is equal to or greater than the end section, which helps to fill the space left by the accessory being replaced, simply with the inner sections.

Preferably, in each arm the length of the inner section is greater than the length of the end section.

When replacing an accessory, the pipes are usually cut flush with this accessory. For efficient and simple replacement, the seal quality should be at least as good as the seal quality of the previous accessory, i.e. the end section should have the same length and internal diameter as the arm of the previous accessory. If, in addition to this, the inner section is the same length as the end section, then at least in theory the volume previously occupied by the previous accessory in the pipe circuit is occupied by the inner sections. Furthermore, if the inner section is longer than the end section, in practice this helps to further occupy the space left by the previous accessory, taking up tolerances, wall thicknesses not taken into account, or cuts that are substandard or not entirely flush.

Preferably, in each arm the stop is a perimeter step.

A stop in the form of a perimeter step delimits a point to which said pipe can enter efficiently and intuitively, as well as clearly marking the change in thickness. Furthermore, being a step-shaped stop instead of a protuberance or a ring, there is only one abrupt change in the form of a single narrowing in the cross-section of the accessory, thereby obviating a second or more abrupt changes following said stop, which helps to reduce potential turbulence in the flow passing through the accessory, and therefore through the related pipe circuit.

Preferably, the inner section and the end section in each arm have the same external diameter.

Different internal diameters combined with identical external diameters results in two different wall thicknesses. This difference creates a step, which acts as a stop. On the other hand, the fact that the external diameters are the same makes the inner sections thicker, thereby making the accessory more robust, while simplifying the design and manufacture of said accessory, which has a continuous smooth external surface with the same thickness between the steps acting as stops.

The difference in thicknesses between the sections of the arms clearly delimits the point to which a pipe can be inserted. Maintaining said thickness between stops helps to make the surface as smooth as possible once a pipe has been inserted in the end section of an arm, for example if the internal diameter of the cross-section of the pipe and the internal diameter of the accessory between the stops are the same, which facilitates the flow through the accessory, reducing possible turbulence and therefore generating less stress, which over time can cause wear or damage to the accessory or the pipes.

Drawings showing a non-limiting example embodiment of the method according to the present invention are attached for a clearer understanding thereof.
Figure 1 is a side view of a conventional T-joint.
Figure 2 is a side view of a conventional elbow joint.
Figure 3 is a side cross-section view of a conventional T-joint.
Figure 4 is a side cross-section view of a conventional elbow joint.
Figure 5 is a side cross-section view of a T-joint according to the present invention.
Figure 6 is a side cross-section view of an elbow joint according to the present invention.

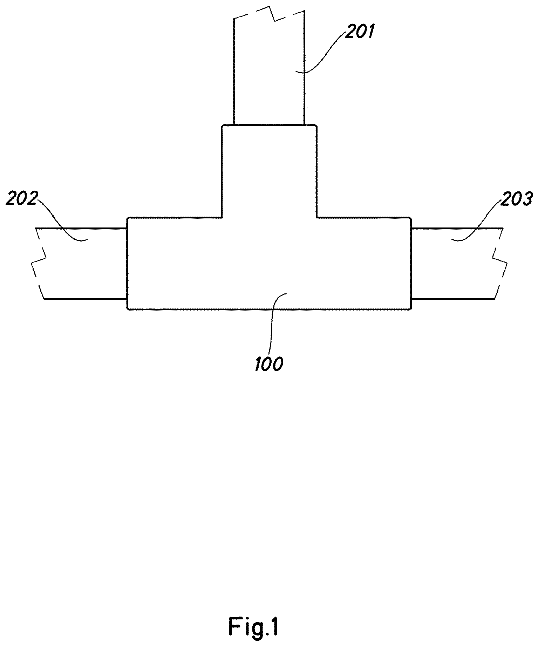

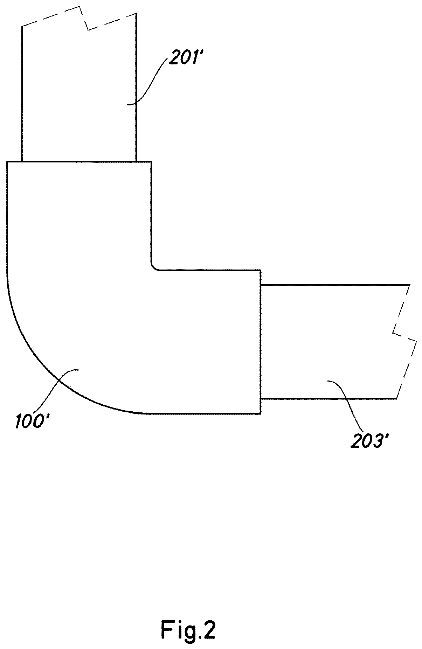

Figures 1 and 2 show accessories 100 and 100' for repairing conventional pipes. Figure 1 shows a T-shaped accessory 100 from the prior art that is usually used to join three pipes 201, 202 and 203, two of which are aligned axially, with the other being perpendicular to the other two. This commonly used accessory is usually somewhat standardized, depending mainly on the diameter of the pipes to be joined. in general and as shown for example in Figure 1, the diameters of the pipes 201, 202 and 203 are the same. Although this is a common case, it does not apply to all installations, for example the pipe 201 perpendicular to the other two pipes 202 and 203 may have a different diameter (larger or smaller). Figure 2 shows another example equivalent to the example in Figure 1, but with an elbow accessory 100' joining two pipes 201' and 203' arranged perpendicular to one another.

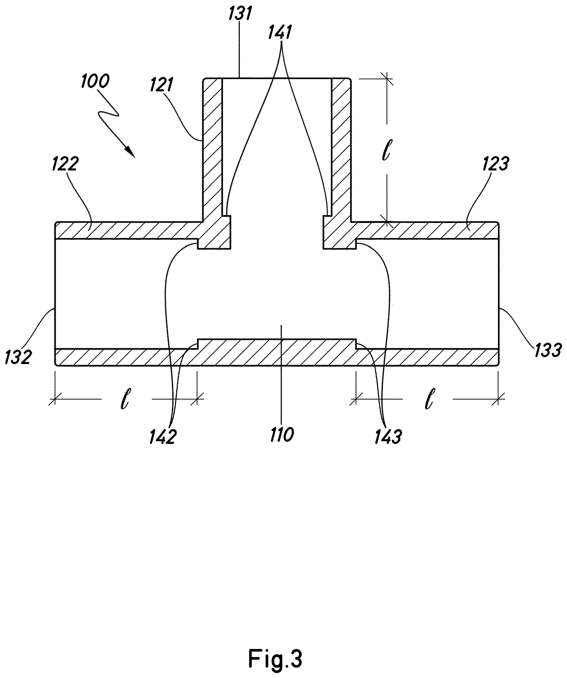

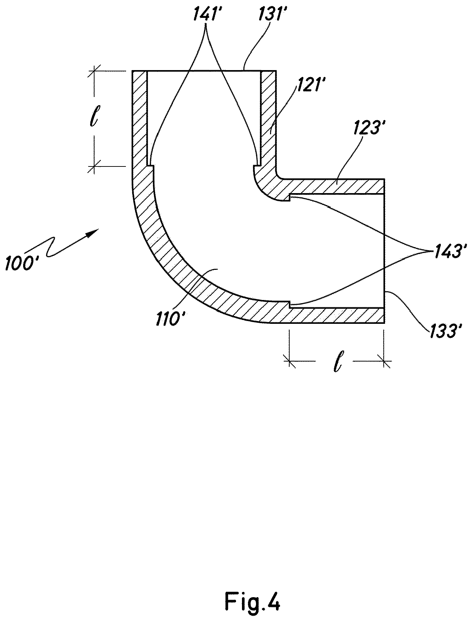

Figures 3 and 4 are side cross-section views of the conventional accessories 100 and 100'. This view shows the internal structure. Figure 3 shows how the T-shaped accessory 100 comprises a core 110 in which the three arms 121, 122 and 123 are connected. This core has a greater wall thickness than the walls of the arms 121, 122 and 123. This change in the thickness of the walls forms circumferential steps 141, 142 and 143 about the inner walls of each arm. Each step 141, 142 and 143 acts as a stop that limits the insertion of each end of the respective pipes 201, 202 and 203. Figure 3 also shows how each of the arms 121, 122 and 123 has a mouth 131, 132 and 133 respectively at the end opposite the core 110. As shown, each arm has an external length I. Said length determines the distance between the plane formed by the circumference of the mouth of the first arm, up to a plane perpendicular to the axis of revolution of said mouth and tangential to an arm perpendicular to said first arm. Figure 4 shows another example equivalent to the example in Figure 3, but with an elbow accessory 100' with arms 121' and 123', mouths 131' and 133', circumferential steps 141' and 143', and a core 110'.

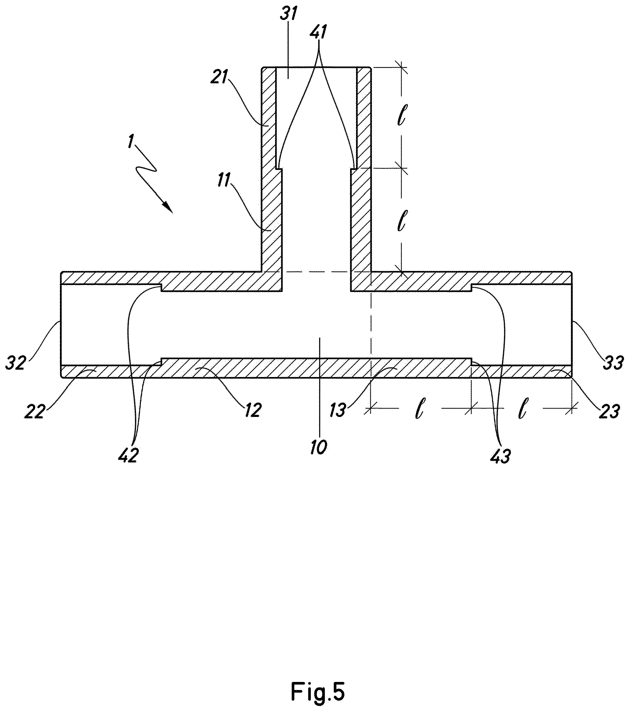

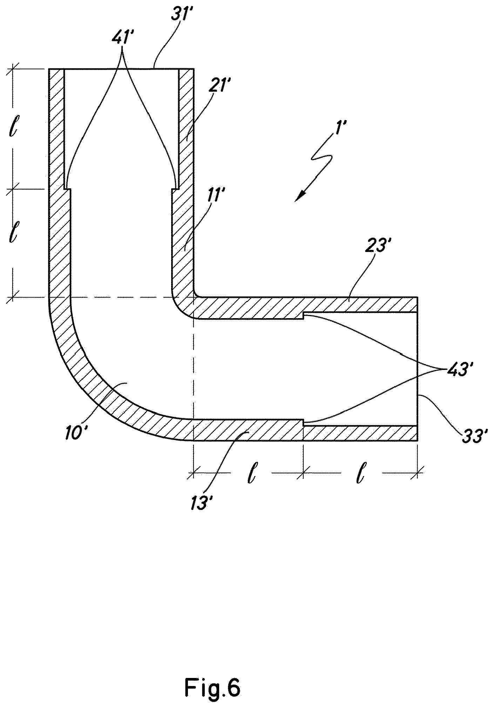

Figures 5 and 6 are side cross-section views of the accessories 100 and 100' according to the present invention. This view shows the internal structure of this type of accessory. Figure 5 also shows how the T-shaped accessory 1 also comprises a core 10 in which the three arms are connected. Unlike Figure 3, in addition to a core 10 similar to the core 110 shown in Figure 3, this accessory has inner sections 11, 12 and 13 for each arm. This core 10 has a wall thickness equal to the thickness of the walls of the inner sections 11, 12 and 13. Moreover, each of the three arms has a respective end section 21, 22 and 23. The end sections 21, 22 and 23 adjacent to the respective mouths 31, 32 and 33 are thinner than the walls of the inner sections 11, 12 and 13 and the core 10. The change in internal diameter between the sections 11, 12 and 13 and the end sections 21, 22 and 23 forms circumferential steps 41, 42 and 43 about the inner walls of each arm. This change combined with the fact that the external diameter does not change along the arms results in two different wall thicknesses: one thickness for the end sections 21, 22 and 23 and another thickness for the inner sections and the core. Similarly to the steps 141, 142 and 143 in Figure 3, each step 41, 42 and 43 acts as a stop that limits the insertion of each end of the respective pipes. Furthermore, said stops 41, 42 and 43 in the form of circumferential steps separate the inner section from the end section 21, 22 and 23 of each arm. In Figures 3 and 4, the stops separate the arms from the core. Moving inwards, the wall thickness is maintained after each stop, and therefore the inner sections 11, 12 and 13 have the same wall thickness as the core 10 and each other. Moreover and as shown, the end sections 21, 22 and 23 have a length I, i.e. the same length as the arms of the standardized conventional accessory in Figures 1 and 3, while the inner sections 11, 12 and 13 also have the same length I. Although this length could be greater, said length I of the inner sections 11, 12 and 13 is an extreme example of an accessory according to the present invention, with the minimum possible length of the inner section, said length being equal to the length of the end sections 21, 22 and 23. The accessory according to the present invention can replace a conventional accessory bearing in mind that the diameter of the mouths 131, 132 and 133 of a conventional accessory, such as the one in Figure 3, usually determines the length of the arms 121, 122 and 123 thereof, on account of which the internal diameter and length of the end sections 21, 22 and 23 of an accessory according to the present invention intended to replace a conventional accessory will be the same as in the arms of the conventional accessory, and therefore the inner section will be at least as long as the end sections 21, 22 and 23. Consequently, the design of the invention is easily adjustable. As a result, according to the invention, the volume of the core combined with the volume of the inner sections occupy the same total volume as the accessory being replaced. Consequently, a single accessory with the defined features can replace a standard accessory, while ensuring the new accessory provides the same sealing and fluidtightness as a new standard accessory on account of the end section 21, 22 and 23 being the same length as the arms of the accessory being replaced. Figure 6 shows another accessory 1' designed according to the same principles as the accessory in Figure 5, with a core 10' identical to the core in the accessory in Figures 2 and 4, inner sections 11' and 13' of the same length as the arms 121' and 123', and end sections 21, 22 and 23 of the same length I as said inner sections 11' and 13' and said arms 121' and 123'. Similarly to the accessory in Figure 5, this accessory has stops 41' and 43' that determine the point on the arm that separates the end section 21, 22 and 23 from the inner section, and mouths 31' and 33' identical to the mouths 131' and 133' in Figures 2 and 4.

Although the invention has been described with reference to examples of preferred embodiments, these must not be considered as limiting the invention, which will be defined by the broadest interpretation of the following claims.

## Claims

1. Accessory for repairing a pipe by welding comprising at least two arms, each arm in turn comprising an end mouth for receiving a pipe and a stop for limiting the insertion of said pipe into the accessory, said accessory being **characterized in that** each arm has an end section designed to receive the pipe and an inner section forming the stop between the end section and the inner section, the internal diameter of the end section being greater than the diameter of the inner section and **in that** the length of the inner section in each arm is equal to or greater than the length of the end section.

2. Accessory according to the previous claim, **characterized in that** in each arm the length of the inner section is greater than the length of the end section.

3. Accessory according to any one of the previous claims, **characterized in that** in each arm the stop is a perimeter step.

4. Accessory according to any one of the previous claims, **characterized in that** in each arm the inner section and the end section have the same external diameter.

5. Accessory according to any one of the previous claims, **characterized in that** in each arm the length of the end section is equal to half the internal diameter thereof.
